# EUROPÄISCHE PATENTSCHRIFT

(11) **EP 1 018 278 B1**
(45) Veröffentlichungstag und Bekanntmachung des Hinweises auf die Patenterteilung: **24.04.2002**
(21) Anmeldenummer: 98956794.6
(22) Anmeldetag: 22.09.1998
(51) Int. Cl.: H04Q 7/32

(54) **DUAL-MODE-MOBILTELEFON**
DUAL MODE MOBILE TELEPHONE
TELEPHONE MOBILE DOUBLE MODE

(30) Priorität: 25.09.1997 DE 19742405
(43) Veröffentlichungstag der Anmeldung: 12.07.2000
(73) Patentinhaber: SIEMENS AKTIENGESELLSCHAFT, 80333 München (DE)
(72) Erfinder: PILLEKAMP, Klaus-Dieter, D-40699 Erkrath (DE); SYDON, Uwe, D-40474 Düsseldorf (DE)
(86) Internationale Anmeldenummer: DE9802834
(87) Internationale Veröffentlichungsnummer: WO9916273

(56) Entgegenhaltungen:
- EP-A- 0 415 502

## Beschreibung

Die Erfindung betrifft ein Dual-Mode-Mobiltelefon, das sowohl als Mobiltelefon, beispielsweise nach GSM-Standard als auch als Mobilteil einer Schnurlos-Telefonanlage verwendet werden kann. Dazu weist das Mobiltelefon eine erste Sende-/Empfangseinrichtung zum Senden/Empfangen von Mobiltelefonsignalen in Zeitmultiplex-Rahmen einer Dauer t₁ mit einer Anzahl von Zeitschlitzen einer Dauer von t₂ in einem ersten Frequenzbereich und eine zweite Sende-/Empfangseinrichtung zum Senden/Empfangen von Signalen in einem zweiten Frequenzbereich, in dem die Schnurlos-Telefonanlage arbeitet, auf.

Die Erfindung betrifft außerdem ein Funk-Übertragungsverfahren für Schnurlostelefone, wobei Signale zwischen einem Mobilteil und einer Basisstation in einem oder mehreren Frequenzkanälen in Zeitmultiplex-Rahmen festgelegter Länge mit Empfangs-Zeitschlitzen und Sende-Zeitschlitzen übertragen werden sowie eine Luftschnittstelle für Schnurlostelefonie.

Der Mobiltelefonstandard GSM (Global System for Mobile Communications) hat weltweite Verbreitung gefunden. Dabei handelt es sich um eine international angewandte Spezifikation, in der die wesentlichen Systemmerkmale des Mobilfunksystems standardisiert sind. Dadurch wird es möglich, Mobiltelefone international einzusetzen (Roaming). Das vollständig digitale GSM-System ermöglicht außerdem eine große Teilnehmerdichte, eine hohe Abhörsicherheit und eine zufriedenstellende Sprachqualität. Neben der Übertragung von Sprachsignalen ist auch eine Datenübertragung beispielsweise zu/von mobilen Faxgeräten oder dergleichen möglich.

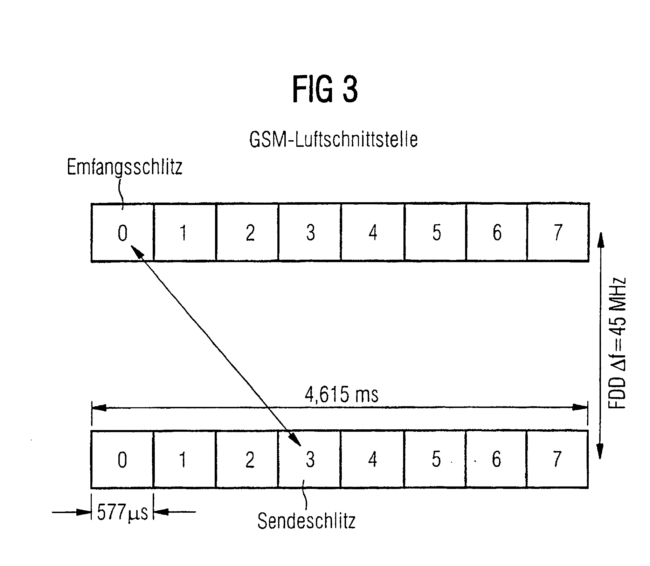

Im folgenden wird die Luftschnittstelle, d. h. das Übertragungsprotokoll für die Funk-Signalübertragung anhand Fig. 3 kurz erläutert. Die in Deutschland und in den meisten europäischen Ländern betriebenen GSM-Netze arbeiten in zwei Übertragungsbändern zwischen 890 und 915 MHz und 935 und 960 MHz. Es ist jedoch auch möglich, eine andere Frequenz zu wählen. Beispielsweise arbeitet das DCS-1800-System ebenfalls nach dem GSM-Standard in einem Frequenzbereich von 1800 MHz (E-Netze).

Zur Sicherstellung eines genügenden Benutzungskomforts müssen die Sprachsignale quasi gleichzeitig in beide Richtungen zwischen den jeweiligen Gesprächsteilnehmern übertragen werden (voll duplexfähig). Im GSM-System dient das untere Frequenzband von 890 bis 915 MHz der Signalübertragung von dem Mobilteil zur Sendestation (Aufwärtsverbindung bzw. Uplink), und das obere Frequenzband zwischen 935 und 960 MHz dient der Signalübertragung von der Sendestation zu dem Mobilteil (Abwärtsverbindung bzw. Downlink). In jedem der beiden Bänder stehen insgesamt 124 Frequenzkanäle mit einem Abstand von 200 kHz zueinander zur Verfügung. Jeder dieser Frequenzkanäle ist wiederum in Zeitmultiplex-Rahmen oder TDMA-Rahmen einer Dauer von 4,615 ms aufgeteilt. Jeder Zeitmultiplex-Rahmen besteht wiederum aus acht Zeitschlitzen von 577 µs Dauer. Für eine Signalübertragung zwischen einem Mobilteil und einer Sende-/Empfangsstation wird jeweils ein Zeitschlitz im unteren Frequenzband zum Senden (aus Sicht des Mobilteils) und ein Zeitschlitz im oberen Frequenzband zum Empfangen von Signalen benötigt. Sende- und Empfangsschlitz weisen neben dem Frequenzabstand von 45 MHz (FDD = Frequency Division Duplex) einen Zeitversatz von 3 Zeitschlitzen, d. h. ungefähr 1,73 ms auf. Weitere Einzelheiten sind beispielsweise in David/- Benkner "Digitale Mobilfunksysteme", Stuttgart, 1996, Kap. 8.1, beschrieben.

Für die Schnurlostelefone ist in Europa der DECT-(Digital European Cordless Telephone)Standard weit verbreitet. Die darin definierte Luftschnittstelle verwendet ein abweichendes Zeit multiplex-Rahmenformat mit einer Rahmendauer von 10 ms, die wiederum in 24 Zeitschlitze von 416,6 µs Dauer aufgeteilt ist.

Für einen Telefonkunden, der sowohl ein Schnurlos-Telefonsystem zu Hause und/oder am Arbeitsplatz als auch ein Mobiltelefon für unterwegs verwendet, wäre es vorteilhaft, ein Mobiltelefon bereitzustellen, das sowohl als Mobilteil einer Schnurlos-Telefonanlage als auch als GSM-Mobiltelefon eingesetzt werden kann. Da jedoch das GSM-Mobiltelefonsystem und beispielsweise das DECT-Schnurlos-Telefonsystem nicht miteinander kompatibel sind, muß ein derartiges Dual-Use-Mobiltelefon nicht nur zwei HF-Sende-/Empfangseinheiten sondern zusätzlich zwei unterschiedliche Umsetzvorrichtungen zur Signalumsetzung in/von den jeweils unterschiedlichen Zeitmultiplex-Rahmenstrukturen aufweisen. Ein derartiges Dual-Mode-Mobiltelefon ist daher in seiner Konstruktion aufwendig und damit vergleichsweise schwer, von großen Abmessungen und teuer.

Aus der EP-0 415 502 A2 ist ein zellulares Kommunikationssystem bekannt, bei dem in jeder Zelle des Kommunikationssystems mindestens eine Basisstation vorgesehen ist, mit der jeweils eine Vielzahl von Mobilstationen verbindbar sind. Das Kommunikationssystem ist dabei derart ausgebildet, daß z. B. ein GSM-Signalisierungsprotokoll an DECT-Kanäle angepaßt ist. Die Mobilstationen können dazu vorzugsweise so ausgebildet sein, daß sie sowohl als GSM-Mobilstationen als auch als DECT-Mobilstationen funktionieren.

Der vorliegenden Erfindung liegt daher die Aufgabe zugrunde, ein Mobiltelefon der eingangs genannten Art vorzuschlagen, das einen Dual-Mode-Betrieb als GSM-Mobiltelefon und als Mobilteil einer Schnurlos-Telefonanlage mit möglichst geringem Aufwand erlaubt.

Der Erfindung liegt außerdem die Aufgabe zugrunde, ein Funk-Übertragungsverfahren für Schnurlostelefone vorzuschlagen, das die Verwendung von Dual-Mode-Mobilteilen erleichtert.

Gelöst wird die Aufgabe durch ein in Anspruch 1 definiertes Mobiltelefon, das eine Umsetzvorrichtung zur Umsetzung von durch die zweite Sende-/Empfangseinrichtung in Empfangs-Zeitschlitzen eines Zeitmultiplex-Rahmens empfangenen Signalen in Nutzsignale und zur Umsetzung von Nutzsignalen in Sende-Zeitschlitze eines Zeitmultiplex-Rahmens zum Senden der Signale mittels der zweiten Sende-/Empfangseinrichtung aufweist, wobei die Dauer eines Zeitmultiplex-Rahmens n × t₁ beträgt, wobei n eine ganze Zahl ≥ 1 ist, und wobei die Dauer eines Sende- und Empfangs-Zeitschlitzes m × t₂ beträgt, wobei m eine ganze Zahl ≥ 1 ist, und wobei die jeweils zugehörigen Sende- und Empfangszeitschlitze mittels der gleichen HF-Trägerfrequenz übertragen werden.

Sende- und Empfangs-Zeitschlitze weisen erfindungsgemäß im Gegensatz zum GSM-System keinen Frequenzunterschied auf. Dies ermöglicht einen einfacheren Aufbau der zweiten HF-Einheit für die Verbindung mit der Schnurlostelefon-Feststation.

Das erfindungsgemäße Mobiltelefon hat den Vorteil, daß die von der Umsetzvorrichtung verarbeitete Zeitmultiplex-Rahmenstruktur von derjenigen des Mobiltelefonsystems, vorzugsweise GSM, abgeleitet ist, so daß eine gemeinsame Taktung sowohl für die Umsetzung der Mobiltelefonsignale als auch der Schnurlos-Telefonsignale verwendet werden kann. Vorteilhaft ist die Umsetzvorrichtung so ausgebildet, daß diese sowohl die GSM-Signale als auch die Schnurlos-Telefonsignale verarbeiten kann. Dadurch wird der Aufbau des erfindungsgemäßen Mobiltelefons weiter vereinfacht.

Vorzugsweise arbeitet die zweite Sende-/Empfangseinrichtung bei einer Sende-Empfangsfrequenz von ungefähr 2,4 GHz. Dies entspricht dem sogenannten ISM(Industrial, Scientific, and Medical)-Frequenzband, das international für Schnurlos-Telefonanwendungen und dergleichen freigehalten ist. Das erfindungsgemäße Mobiltelefon kann so international eingesetzt werden.

Vorzugsweise hat ein Zeitmultiplex-Rahmen eine Dauer von 4,615 ms. Es sind jedoch auch Vielfache dieser Zeitdauer möglich. Ein Sende- und Empfangs-Zeitschlitz kann vorzugsweise eine Dauer von 577 µs haben. Jedoch sind hier ebenfalls ganzzahlige Vielfache dieser Dauer möglich, beispielsweise 1154 µs.

Vorzugsweise arbeitet die Umsetzvorrichtung wie das GSM-System mit einer Datenrate von 271 kBit/s. Da jedoch weniger Signalisierungs- und Abgleichdaten erforderlich sind, kann die nutzbare Datenrate höher als bei GSM sein.

Sende- und Empfangs-Zeitschlitze können jeweils abwechselnd aufeinander folgen. Es ist jedoch auch möglich, daß eine Gruppe von zwei oder vier Empfangsschlitzen auf eine Gruppe von ebenfalls zwei oder vier Sendeschlitzen folgt. Die Reihenfolge von Sende- und Empfangsschlitzen spielt dabei keine Rolle. Eine weitere Möglichkeit ist, in einen Zeitmultiplex-Rahmen nur Sendeschlitze und in dem darauf folgenden Zeitmultiplex-Rahmen nur Empfangs-Zeitschlitze vorzusehen.

Vorteilhaft weist das erfindungsgemäße Mobiltelefon eine Umschalteinrichtung zum automatischen Umschalten zwischen einem ersten Betriebszustand als Mobiltelefon und einem zweiten Betriebszustand als Mobilteil einer Schnurlos-Telefonanlage auf. Dies ermöglicht eine sehr komfortable Benutzung des Dual-Mode-Mobiltelefons, da der Benutzer nicht selbst zwischen Mobiltelefon und Schnurlos-Telefonbetrieb umschalten muß. Die Umschalteinrichtung erfaßt den Pegel eines von der zweiten Sende-/Empfangseinrichtung empfangenen Signals von der Schnurlostelefon-Feststation. Liegt dieser Signalpegel über einem festgelegten Wert, arbeitet das Dual-Mode-Mobiltelefon als Schnurlostelefon-Mobilteil, andernfalls als Mobiltelefon.

Das erfindungsgemäße Mobiltelefon kann als Teil einer Schnurlos-Telefonanlage verwendet werden. Dabei kann die Schnurlos-Telefonanlage vorteilhaft nur eine Hochfrequenz-Einheit zur Verbindung mit der zweiten Hochfrequenz-Einheit des Mobiltelefons aufweisen.

Die Erfindung schlägt des weiteren ein Funk-Übertragungsverfahren für Schnurlostelefone vor, bei dem die Dauer eines Zeitmultiplex-Rahmens n × t₁, die Dauer der Sende- und Empfangszeitschlitze m × t₂ ist und die Sende- und Empfangszeitschlitze mit der gleichen Trägerfrequenz übertragen werden, wobei m, n ganze Zahlen ≥ 1, t₁ die Dauer eines GSM-Zeitmultiplex-Rahmens und t₂ die Länge eines GSM-Zeitschlitzes ist.

Vorzugsweise weist ein Zeitmultiplex-Rahmen eine Dauer von 4,615 ms oder ein Vielfaches davon, ein Zeitschlitz eine Dauer von 577 µs oder ein ganzzahliges Vielfaches davon auf. Die Übertragungsdatenrate beträgt vorzugsweise 271 kBit/s.

Dabei können Sende- und Empfangszeitschlitze jeweils einzeln oder in Gruppen abwechselnd aufeinander folgen. Es ist auch möglich, daß ein Zeitmultiplex-Rahmen nur eine Anzahl von Sendeschlitzen und der darauffolgende Zeitmultiplex-Rahmen eine Anzahl von Empfangsschlitzen enthält.

Das erfindungsgemäße Mobiltelefon und das erfindungsgemäße Funk-Übertragungsverfahren werden anhand von Ausführungsbeispielen unter Bezugnahme auf die beiliegenden Zeichnungen erläutert, in denen
Fig. 1 eine schematische Darstellung eines erfindungsgemäßen Mobiltelefons,
Figur 2 eine schematische Darstellung von erfindungsgemäßen Zeitmultiplex-Rahmenstrukturen und
Figur 3 eine schematische Darstellung der Zeitmultiplex-Rahmenstruktur der GSM-Luftschnittstelle ist.

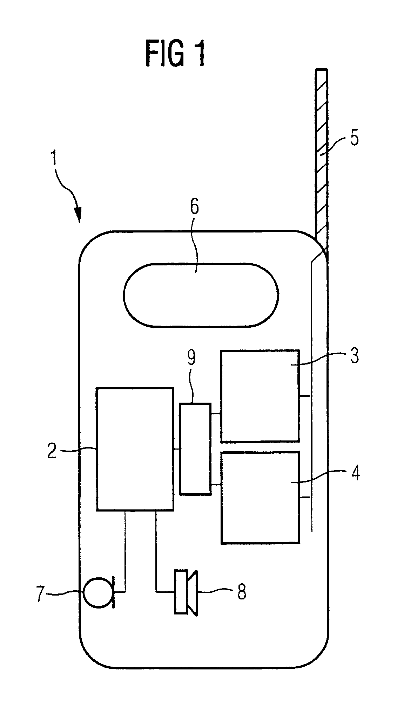

Das in Figur 1 dargestellte Mobiltelefon 1 weist als erste Sende-/Empfangseinrichtung eine an sich bekannte erste HF-Einheit 3 zum Senden und Empfangen von Signalen nach dem GSM-Standard, die mit einer Sende-Empfangsantenne 5 verbunden ist, auf. Ferner enthält das erfindungsgemäße Mobiltelefon eine (nicht dargestellte) Zentralsteuereinheit zur Steuerung der Betriebsfunktionen, eine Tastatur als Eingabeschnittstelle, eine Anzeigeeinrichtung 6 sowie eine (nicht dargestellte) Stromversorgungseinrichtung und ein geeignetes Gehäuse.

Darüber hinaus weist das erfindungsgemäße Mobiltelefon als zweite Sende-/Empfangseinrichtung eine zweite HF-Einheit 4 auf, die mit der gleichen Sende-Empfangsantenne 5 verbunden ist, jedoch bei einer Frequenz von ungefähr 2,4 GHz, dem sogenannten ISM-Band sendet und empfängt. Erste und zweite HF-Einheit 3, 4 können jedoch auch als gemeinsames Bauelement ausgebildet sein. Sie weisen einen Codierer/Decodierer auf und sind mit einer gemeinsamen Umsetzvorrichtung 2 verbunden, die ein von der ersten oder zweiten HF-Einheit empfangenes und decodiertes Signal in Nutzsignale, insbesondere Sprachsignale, umsetzt, die an einem Lautsprecher 8 des Mobiltelefons ausgegeben werden. Jedoch ist das erfindungsgemäße Mobiltelefon nicht auf die Übertragung von Sprachsignalen beschränkt, sondern es können ebenso Datensignale für einen tragbaren Computer, Faxgerät oder dergleichen, die an dem Mobiltelefon angeschlossen werden können, übertragen werden.

Die Umsetzvorrichtung 2 dient auch dazu, Nutzsignale wie an einem Mikrofon 7 des Mobiltelefons empfangene Sprachsignale oder auch niederfrequente Datensignale beispielsweise mittels einer Speichereinrichtung und eines sogenannten Burst-Mode-Controllers in sich periodisch wiederholende Sende-Zeitschlitze eines Multiplexrahmens umzusetzen. Die Auslesedatenrate beträgt dabei vorzugsweise 271 kbit/s entsprechend dem GSM-Standard. Die so erhaltenen Burst-Signale werden durch die zweite HF-Einheit 4 codiert und mittels der 2,4 GHz-Trägerfrequenz gesendet. Die Länge eines Zeitmultiplex-Rahmens, den die Umsetzeinrichtung 2 verarbeitet, beträgt n × t₁, wobei n eine ganze Zahl ≥ 1 und t₁ die Rahmendauer beim GSM-System, d.h. ca. 4,615 ms ist. Die Länge eines Sendeschlitzes beträgt m × t₂, wobei m eine ganze Zahl ≥ 1 und t₂ die Zeitschlitzlänge des GSM-Standards, d. h. ca. 577 µs ist. Durch die Verwendung einer von dem GSM-Standard abgeleiteten Zeitstruktur der Lufcschnittstelle ist es möglich, die Umsetzeinrichtung 2 sowohl für die an der ersten HF-Einheit 3 gesendeten/empfangenen GSM-Signale als auch für die an der zweiten HF-Einheit 4 gesendeten/empfangenen Schnurlos-Telefonsignale wenigstens in wesentlichen Komponenten gemeinsam zu verwenden. Insbesondere kann die gleiche Zeitsteuerung bzw. für beide Betriebsmoden des erfindungsgemäßen Dual-Mode-Mobiltelefons verwendet werden.

Vorzugsweise weist das erfindungsgemäße Mobiltelefon 1 eine Umschalteinrichtung 9 zum automatischen Umschalten zwischen GSM-Betrieb und Schnurlos-Telefonbetrieb auf. Der Pegel eines an dem zweiten HF-Modul empfangenen Signals wird erfaßt und mit einem festgelegten Wert verglichen. Liegt der Pegel des empfangenen Schnurlostelefonsignals oberhalb des festgelegten Wertes, wird erkannt, daß sich das Mobiltelefon innerhalb der Reichweite des zugehörigen Schnurlostelefonsystems befindet, und das Mobiltelefon wird somit in den Schnurlostelefon-Betriebszustand geschaltet. Wird ein Signalpegel unterhalb des Grenzwertes erfaßt, wird angenommen, daß sich das erfindungsgemäße Mobiltelefon nicht innerhalb des Sendebereichs der Schnurlostelefonsystem-Feststation befindet und es wird in den Mobiltelefon-Betriebsmodus versetzt.

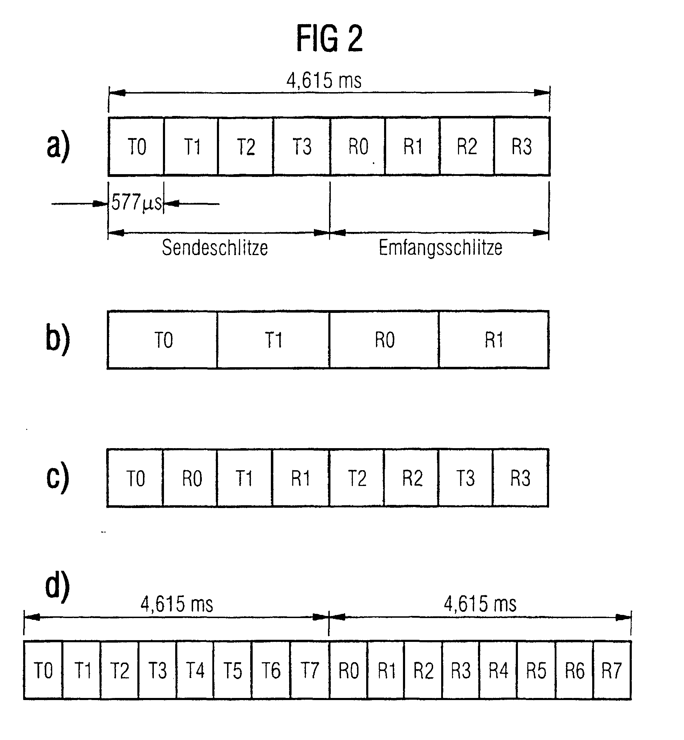

Anhand Figur 2 werden im folgenden beispielhafte Zeitmultiplex-Rahmenstrukturen der erfindungsgemäßen Luftschnittstelle für Schnurlostelefonie beschrieben.

Ein in Figur 2a gezeigtes Schnurlostelefonsignal setzt sich aus Zeitmultiplex-Rahmen einer Länge von 4,615 ms entsprechend der GSM-Rahmendauer zusammen. Ein Rahmen ist aufgeteilt in vier Sendeschlitze T0 bis T3 einer Dauer von jeweils 577 µs und vier darauffolgende Empfangsschlitze R0 bis R3 einer Dauer von ebenfalls 577 µs. Es sei angemerkt, daß die Reihenfolge auch umgekehrt sein kann, so daß die Empfangsschlitze den Sendeschlitzen (jeweils in Bezug auf das Mobil telefon) vorangehen. Die Übertragung erfolgt vorzugsweise im 2,4 GHz-ISM-Band in einem oder vorzugsweise mehreren Frequenzbändern. Wesentlich ist jedoch, daß im Gegensatz zum GSM-System die Sendeschlitze und Empfangsschlitze im gleichen Frequenzkanal benutzt werden, so daß die zweite HF-Einheit nicht mit unterschiedlichen Sende- und Empfangsfrequenzen arbeiten muß.

Figur 2b) zeigt einen Zeitmultiplex-Rahmen von ebenfalls 4,15 ms Dauer, wobei jedoch die Sendeschlitze T0 und T1 und die Empfangsschlitze R0 und R1 jeweils eine Länge von 1,154 ms haben.

Bei dem Beispiel von Figur 2c) wechseln sich jeweils ein Sendeschlitz T0, T1, ... und ein Empfangsschlitz R0, R1, ... ab. Bei dem Beispiel von Figur 2d) enthält ein erster Zeitmultiplex-Rahmen von ebenfalls 4,615 ms Dauer acht Sendeschlitze T0 bis T7 und der darauffolgende Zeitmultiplex-Rahmen acht Empfangsschlitze R0 bis R7.

Wesentlich ist, daß die Struktur der für die Schnurlostelefon-Übertragung verwendeten Zeitmultiplex-Rahmen derjenigen des Mobiltelefonstandards bzw. ganzzahligen Vielfachen von diesen entsprechen, so daß für die Mobiltelefonübertragung und die Schnurlostelefon-Übertragung die gleiche Zeitsteuerung verwendet werden kann. Vorteilhaft kann für beide Übertragungsarten die gleiche Umsetzeinrichtung verwendet werden.

## Patentansprüche

1. Mobiltelefon, aufweisend
eine erste Einrichtung (3) zum Senden/Empfangen von Mobilfunksignalen in Zeitmultiplex-Rahmen einer Dauer t₁ mit einer Anzahl von Zeitschlitzen einer Dauer t₂ in einem ersten Frequenzbereich,
eine zweite Einrichtung (4) zum Senden/Empfangen von Signalen in einem zweiten Frequenzbereich,
**gekennzeichnet durch**
eine Umsetzvorrichtung (2) zur Umsetzung von **durch** die zweite Sende-/Empfangseinrichtung (4) in Empfangs-Zeitschlitzen empfangenen Signalen in Nutzsignale und zur Umsetzung von Nutzsignalen in Sende-Zeitschlitze eines Zeitmultiplex-Rahmens zum Senden **durch** die zweite Sende-/Empfangseinrichtung(4), wobei
- die Dauer eines Zeitmultiplex-Rahmens n × t₁ ist, wobei n eine ganze Zahl ≥ 1 ist,
- die Dauer eines Sende- und Empfangszeitschlitzes m × t₂ ist, wobei m eine ganze Zahl ≥ 1 ist, und
- jeweils zugehörige Sende- und Empfangs-Zeitschlitze mit der gleichen HF-Trägerfrequenz übertragen werden.

2. Mobiltelefon nach Anspruch 1,
**dadurch gekennzeichnet,**
**daß** die Umsetzvorrichtung (2) zusätzlich zur Umsetzung von durch die erste Sende-/Empfangseinrichtung(3) empfangene GSM-Signale in Nutzsignale und zur Umsetzung von Nutzsignalen in GSM-Zeitmultiplex-Rahmen zur Übertragung durch die erste Sende-/Empfangseinrichtung(3) ausgebildet ist.

3. Mobiltelefon nach Anspruch 1 oder 2,
**dadurch gekennzeichnet,**
**daß** die zweite Sende-/Empfangseinrichtung(4) eine Sende- /Empfangsfrequenz von ungefähr 2,4 GHz aufweist.

4. Mobiltelefon nach einem der Ansprüche 1 bis 3,
**dadurch gekennzeichnet,**
**daß** die Umsetzvorrichtung (2) Zeitmultiplex-Rahmen einer Dauer von n × 4,615 ms verarbeitet.

5. Mobiltelefon nach einem der Ansprüche 1 bis 4,
**dadurch gekennzeichnet,**
**daß** die Umsetzvorrichtung (2) Sende- und Empfangs-Zeitschlitze einer Dauer von m x 577 µs verarbeitet.

6. Mobiltelefon nach einem der Ansprüche 1 bis 5,
**dadurch gekennzeichnet,**
**daß** die Umsetzvorrichtung (2) eine Datenrate von 271 kBit/s aufweist.

7. Mobiltelefon nach einem der Ansprüche 1 bis 6,
**dadurch gekennzeichnet,**
**daß** in einem Zeitmultiplex-Rahmen Sende- und Empfangs-Zeitschlitze jeweils abwechselnd aufeinander folgen.

8. Mobiltelefon nach einem der Ansprüche 1 bis 6,
**dadurch gekennzeichnet,**
**daß** in einem Zeitmultiplex-Rahmen jeweils eine festgelegte Anzahl von Sende-Zeitschlitzen und eine festgelegte Anzahl von Empfangs-Zeitschlitzen abwechselnd aufeinander folgen.

9. Mobiltelefon nach einem der Ansprüche 1 bis 6,
**dadurch gekennzeichnet,**
**daß** jeweils ein Zeitmultiplex-Rahmen mit einer festgelegten Anzahl von Sende-Zeitschlitzen und ein Zeitmultiplex-Rahmen mit einer festgelegten Anzahl von Empfangs-Zeitschlitzen aufeinander folgen.

10. Mobiltelefon nach einem der Ansprüche 2 bis 9,
**gekennzeichnet durch**
eine Umschalteinrichtung (9) zum automatischen Umschalten zwischen
- einem ersten Betriebszustand zum Senden/Empfangen von Signalen mittels der ersten Sende-/Empfangseinrichtung(3) und
- einem zweiten Betriebszustand zum Senden/Empfangen von Signalen mittels der zweiten Sende/Empfangseinrichtung(4).

11. Mobiltelefon nach Anspruch 10,
**dadurch gekennzeichnet,**
**daß** die Umschalteinrichtung (9) den Pegel eines von der zweiten Sende-/Empfangseinrichtung(4) empfangenen Signals erfaßt und in Abhängigkeit von dem erfaßten Signalpegel zwischen erstem und zweitem Betriebszustand umschaltet.

12. Mobiltelefon nach einem der Ansprüche 1 bis 11,
**dadurch gekennzeichnet,**
**daß** die erste Sende-/Empfangseinrichtung (3) zum Senden/Empfangen von Mobilfunksignalen nach dem GSM-Standard ausgebildet ist.

13. Mobiltelefon nach einem der Ansprüche 1 bis 12,
**dadurch gekennzeichnet,**
**daß** das Mobiltelefon als wenigstens ein Mobilteil einer Schnurlos-Telefonanlage ausgebildet ist, die eine Feststation und wenigstens ein Mobilteil aufweist.

14. Mobiltelefon nach Anspruch 13,
**dadurch gekennzeichnet,**
**daß** das Mobiltelefon mit der Feststation verbunden ist, wobei die Feststation nur eine Sende-/Empfangseinrichtung zum Senden/Empfangen von Signalen in dem zweiten Frequenzbereich aufweist.

15. Luftschnittstelle für Schnurlostelefonie, aufweisend bei einer festgelegten Trägerfrequenz zu übertragende Zeitmultiplex-Rahmen einer festgelegten Dauer mit einer festgelegten Anzahl von Zeitschlitzen, wobei
- die Dauer eines Zeitmultiplex-Rahmens n × t₁ ist, wobei n eine ganze Zahl ≥ 1 und t₁ die Dauer eines vorgegebenen Zeitmultiplex-Rahmens, insbesondere eines GSM-Zeitmultiplex-Rahmens ist,
- die Dauer eines Zeitschlitzes m × t₂ ist, wobei m eine ganze Zahl ≥ 1 und t₂ die Zeitschlitzdauer ist, und
- die jeweils zugehörigen Sende- und Empfangs-Zeitschlitze im gleichen Zeitmultiplex-Rahmen oder in benachbarten Zeitmultiplex-Rahmen der gleichen Trägerfrequenz angeordnet sind.

16. Funk-Übertragungsverfahren für Schnurlostelefonie, wobei Funksignale zwischen einem Mobilteil und einer Basisstation in einem oder mehreren Frequenzkanälen in Sende- und Empfangs-Zeitschlitzen, die in Zeitmultiplex-Rahmen festgelegter Länge angeordnet sind, übertragen werden,
**dadurch gekennzeichnet, daß**
- die Dauer eines Zeitmultiplex-Rahmens n × t₁ ist, wobei n eine ganze Zahl ≥ 1 und t₁ die Dauer eines vorgegebenen Zeitmultiplex-Rahmens, insbesondere eines GSM-Zeitmultiplex-Rahmens ist,
- die Dauer eines Zeitschlitzes m × t₂ ist, wobei m eine ganze Zahl ≥ 1 und t₂ die Zeitschlitzlänge ist, und
- die jeweils zugehörigen Sende- und Empfangs-Zeitschlitze mittels der gleichen HF-Trägerfrequenz übertragen werden.

17. Funk-Übertragungsverfahren nach Anspruch 16,
**dadurch gekennzeichnet,**
**daß** die Übertragungsfrequenz ungefähr 2,4 GHz beträgt.

18. Funk-Übertragungsverfahren nach Anspruch 16 oder 17,
**dadurch gekennzeichnet,**
**daß** ein Zeitmultiplex-Rahmen eine Dauer von n × 4,615 ms hat.

19. Funk-Übertragungsverfahren nach einem der Ansprüche 16 bis 18,
**dadurch gekennzeichnet,**
**daß** ein Sende- und Empfangs-Zeitschlitz eine Dauer von m × 577 µs hat.

20. Funk-Übertragungsverfahren nach einem der Ansprüche 16 bis 19,
**dadurch gekennzeichnet,**
**daß** die Übertragungsdatenrate 271 kbit/s beträgt.

21. Funk-Übertragungsverfahren nach einem der Ansprüche 16 bis 20,
**dadurch gekennzeichnet,**
**daß** in einem Zeitmultiplex-Rahmen jeweils eine festgelegte Anzahl von Sende- Zeitschlitzen und eine festgelegte Anzahl von Empfangs-Zeitschlitzen abwechselnd aufeinander folgen.

22. Funk-Übertragungsverfahren nach einem der Ansprüche 16 bis 20,
**dadurch gekennzeichnet,**
**daß** jeweils ein Zeitmultiplex-Rahmen mit einer festgelegten Anzahl von Sende-Zeitschlitzen und ein Zeitmultiplex-Rahmen mit einer festgelegten Anzahl von Empfangs-Zeitschlitzen aufeinander folgen.

## Claims

1. Mobile telephone exhibiting a first device (3) for transmitting/receiving mobile radio signals in time-division multiplex frames of a duration t₁ with a number of time slots of a duration t₂ in a first frequency band, a second device (4) for transmitting/receiving signals in a second frequency band, **characterized by** a conversion device (2) for converting signals received in receive time slots via the second transceiver device (4) into useful signals and for converting useful signals into transmit time slots of a time-division multiplex frame for transmission via the second transceiver device (4),
- the duration of a time-division multiplex frame being n × t₁, n being an integral number of ≥ 1,
- the duration of a transmit and receive time slot being m × t₂, m being an integral number of ≥ 1, and
- in each case the associated transmit and receive time slots being transmitted at the same RF carrier frequency.

2. Mobile telephone according to Claim 1, **characterized in that** the conversion device (2) is additionally constructed for converting GSM signals, received by the first transceiver device (3), into useful signals and for converting useful signals into GSM time-division multiplex frames for transmission by the first transceiver device (3) .

3. Mobile telephone according to Claim 1 or 2, **characterized in that** the second transceiver device (4) exhibits a transmitting/receiving frequency of approximately 2.4 GHz.

4. Mobile telephone according to one of Claims 1 to 3, **characterized in that** the conversion device (2) processes time-division multiplex frames of a duration of n × 4.615 ms.

5. Mobile telephone according to one of Claims 1 to 4, **characterized in that** the conversion device (2) processes transmitting and receiving time slots of a duration of m × 577 µs.

6. Mobile telephone according to one of Claims 1 to 5, **characterized in that** the conversion device (2) exhibits a data rate of 271 kbit/s.

7. Mobile telephone according to one of Claims 1 to 6, **characterized in that**, in a time-division multiplex frame, transmit and receive time slots in each case follow one another alternately.

8. Mobile telephone according to one of Claims 1 to 6, **characterized in that**, in a time-division multiplex frame, in each case a fixed number of transmit time slots and a fixed number of receive time slots follow one another alternately.

9. Mobile telephone according to one of Claims 1 to 6, **characterized in that** in each case one time-division multiplex frame with a fixed number of transmit time slots and one time-division multiplex frame with a fixed number of receive time slots follow one another.

10. Mobile telephone according to one of Claims 2 to 9, **characterized by** a switching device (9) for automatically switching between
- a first operating state for transmitting/- receiving signals by means of the first transceiver device (3) and
- a second operating state for transmitting/- receiving signals by means of the second transceiver device (4).

11. Mobile telephone according to Claim 10, **characterized in that** the switching device (9) detects the level of a signal received by the second transceiver device (4) and switches between the first and second operating state in dependence on the detected signal level.

12. Mobile telephone according to one of Claims 1 to 11, **characterized in that** the first transceiver device (3) is constructed for transmitting/ - receiving mobile radio signals according to the GSM standard.

13. Mobile telephone according to one of Claims 1 to 12, **characterized in that** the mobile telephone is constructed as at least one mobile part of a cordless telephone system which has a fixed part and at least one mobile part.

14. Mobile telephone according to Claim 13, **characterized in that** the mobile telephone is connected to the fixed part, the fixed part only having a transceiver device for transmitting/- receiving signals in the second frequency band.

15. Air interface for cordless telephony, exhibiting time-division multiplex frames of a fixed duration with a fixed number of time slots, to be transmitted at a fixed carrier frequency,
- the duration of a time-division multiplex frame being n × t₁, n being an integral number of ≥ 1 and t₁ being the duration of a predetermined time-division multiplex frame, particularly a GSM time-division multiplex frame,
- the duration of a time slot being m × t₂, m being an integral number of ≥ 1 and t₂ being the time slot duration, and
- the respective associated transmit and receive time slots being arranged in the same time-division multiplex frame or in adjacent time-division multiplex frames of the same carrier frequency.

16. Radio transmission method for cordless telephony, wherein radio signals are transmitted between a mobile part and a base station in one or more frequency channels in transmit and receive time slots which are arranged in time-division multiplex frames of fixed length, **characterized in that**
- the duration of a time-division multiplex frame is n × t₁, n being an integral number of ≥ 1 and t₁ being the duration of a predetermined time-division multiplex frame, particularly a GSM time-division multiplex frame,
- the duration of a time slot is m × t₂, m being an integral number of ≥ 1 and t₂ being the time slot duration, and
- the respective associated transmit and receive time slots are transmitted by means of the same RF carrier frequency.

17. Radio transmission method according to Claim 16,
**characterized in that** the transmission frequency is approximately 2.4 GHz.

18. Radio transmission method according to Claim 16 or 17, **characterized in that** a time-division multiplex frame has a duration of n × 4.615 ms.

19. Radio transmission method according to one of Claims 16 to 18, **characterized in that** a transmit and receive time slot has a duration of m × 577 µs.

20. Radio transmission method according to one of Claims 16 to 19, **characterized in that** the transmission data rate is 271 kbit/s.

21. Radio transmission method according to one of Claims 16 to 20, **characterized in that**, in a time-division multiplex frame, in each case a fixed number of transmit time slots and a fixed number of receive time slots follow one another alternately.

22. Radio transmission method according to one of Claims 16 to 20, **characterized in that** in each case one time-division multiplex frame with a fixed number of transmit time slots and one time-division multiplex frame with a fixed number of receive time slots follow one another.

## Revendications

1. Téléphone portable comportant
un premier dispositif (3) destiné à émettre / recevoir des signaux de radio mobile dans des trames de multiplexage temporel d'une longueur t₁ ayant un nombre de fenêtres temporelles d'une longueur t₂ dans une première gamme de fréquences, un deuxième dispositif (4) destiné à émettre / recevoir des signaux dans une deuxième gamme de fréquences,
**caractérisé par le fait**
**que** le dispositif de transposition (2) destiné à la transposition en signaux utiles de signaux reçus, dans des fenêtres temporelles de réception, grâce au deuxième dispositif d'émission-réception (4) et à la transposition de signaux utiles, dans des fenêtres temporelles d'émission d'une trame de multiplexage temporel, destinées à être émises par le deuxième dispositif d'émission / réception (4),
- la longueur d'une trame de multiplexage temporel étant égale à n x t₁, dans laquelle n est un nombre entier ≥ 1,
- la longueur d'une fenêtre temporelle d'émission et de réception étant égale à m x t₂, dans laquelle m est un nombre entier ≥ 1, et
- les fenêtres temporelles d'émission et de réception, qui se correspondent, étant transmises avec la même fréquence porteuse HF.

2. Téléphone portable selon la revendication 1
**caractérisé par le fait**
**que** le dispositif de transposition (2) est, en plus, conçu pour la transposition en signaux utiles de signaux GSM reçus par le premier dispositif d'émission / réception (3) et pour la transposition de signaux utiles dans des trames GSM de multiplexage temporel pour être transmis par le premier dispositif d'émission / réception (3).

3. Téléphone portable selon la revendication 1 ou 2
**caractérisé par le fait**
**que** le deuxième dispositif d'émission / réception (4) a une fréquence d'émission / réception d'environ 2,4 GHz.

4. Téléphone portable selon l'une des revendications 1 à 3
**caractérisé par le fait**
**que** le dispositif de transposition (2) traite des trames de multiplexage temporel d'une longueur de n x 4,615 ms.

5. Téléphone portable selon l'une des revendications 1 à 4
**caractérisé par le fait**
**que** le dispositif de transposition (2) traite des fenêtres temporelles d'émission et de réception d'une longueur de m x 577 µs.

6. Téléphone portable selon l'une des revendications 1 à 5
**caractérisé par le fait**
**que** le dispositif de transposition (2) a un débit de données de 271 kbit/s.

7. Téléphone portable selon l'une des revendications 1 à 6
**caractérisé par le fait**
**que**, dans une trame de multiplexage temporel, les fenêtres temporelles d'émission et de réception se suivent à tour de rôle.

8. Téléphone portable selon l'une des revendications 1 à 6
**caractérisé par le fait**
**que**, dans une trame de multiplexage temporel, un nombre fixé de fenêtres temporelles d'émission et un nombre fixé de fenêtres temporelles de réception se suivent à tour de rôle.

9. Téléphone portable selon l'une des revendications 1 à 6
**caractérisé par le fait**
**qu'**une trame de multiplexage temporel ayant un nombre fixé de fenêtres temporelles d'émission et une trame de multiplexage temporel ayant un nombre fixé de fenêtres temporelles de réception se suivent à tour de rôle.

10. Téléphone portable selon l'une des revendications 2 à 9
**caractérisé par**
un dispositif de commutation (9) destiné à la commutation automatique entre
- un premier état de fonctionnement destiné à émettre / recevoir des signaux au moyen du premier dispositif d'émission / réception (3) et
- un deuxième état de fonctionnement destiné à émettre / recevoir des signaux au moyen du deuxième dispositif d'émission / réception (4).

11. Téléphone portable selon la revendication 10
**caractérisé par le fait**
**que** le dispositif de commutation (9) détecte le niveau d'un signal reçu par le deuxième dispositif d'émission / réception (4) et commute, en fonction du niveau de signal détecté, entre le premier et le deuxième état de fonctionnement.

12. Téléphone portable selon l'une des revendications 1 à 11
**caractérisé par le fait**
**que** le premier dispositif d'émission / réception (3) est conçu pour émettre / recevoir des signaux de radio mobile selon la norme GSM.

13. Téléphone portable selon l'une des revendications 1 à 12
**caractérisé par le fait**
**que** le téléphone portable conçu comme au moins un poste mobile d'une installation téléphonique sans cordon, qui comporte une station fixe et au moins un poste mobile.

14. Téléphone portable selon la revendication 13
**caractérisé par le fait**
**que** le téléphone portable est relié à la station fixe, la station fixe ne comportant qu'un dispositif d'émission / réception destiné à émettre /recevoir des signaux dans la deuxième gamme de fréquences.

15. Interface aérienne pour la téléphonie sans cordon, comportant, pour une fréquence porteuse fixée, des trames de multiplexage à transmettre, d'une longueur déterminée et ayant un nombre fixé de fenêtres temporelles,
- la longueur d'une trame de multiplexage temporel étant égale à n x t₁, dans laquelle n est un nombre entier ≥ 1 et t₁, la longueur d'une trame de multiplexage temporel prédéterminée, notamment, d'une trame GSM de multiplexage temporel,
- la longueur d'une fenêtre temporelle étant égale à m x t₂, dans laquelle m est un nombre entier ≥ 1 et t₂, la longueur d'une fenêtre temporelle et
- les fenêtres temporelles correspondantes d'émission et de réception étant disposées dans la même trame de multiplexage temporel ou dans des trames voisines de multiplexage temporel de la même fréquence porteuse.

16. Procédé de transmission par radio pour la téléphonie sans cordon, les signaux radio étant transmis entre un poste mobile et une station de base dans un ou plusieurs canaux de fréquences dans des fenêtres temporelles d'émission et de réception, qui sont disposées dans des trames de multiplexage temporel de longueur fixée,
**caractérisé par le fait que**
- la longueur d'une trame de multiplexage temporel est égale à n x t₁, dans laquelle n est un nombre entier ≥ 1 et t₁, la longueur d'une trame de multiplexage temporel prédéterminée, notamment, d'une trame GSM de multiplexage temporel,
- la longueur d'une fenêtre temporelle étant égale à m x t₂, dans laquelle m est un nombre entier ≥ 1 et t₂, la longueur d'une fenêtre temporelle et
- les fenêtres temporelles correspondantes d'émission et de réception étant transmises au moyen de la même fréquence porteuse.

17. Procédé de transmission par radio selon la revendication 16
**caractérisé par le fait**
**que** la fréquence de transmission s'élève à environ 2,4 GHz.

18. Procédé de transmission par radio selon la revendication 16 ou 17
**caractérisé par le fait**
**que** la trame de multiplexage temporel a une longueur de n x 4,615 ms.

19. Procédé de transmission par radio selon l'une des revendications 16 à 18
**caractérisé par le fait**
**qu'**une fenêtre temporelle d'émission et de réception a une longueur de m x 577 µs.

20. Procédé de transmission par radio selon l'une des revendications 16 à 19
**caractérisé par le fait**
**que** le débit de transmission de données est égal à 271 kbit/s.

21. Procédé de transmission par radio selon l'une des revendications 16 à 20
**caractérisé par le fait**
**que**, dans une trame de multiplexage temporel, un nombre fixé de fenêtres temporelles d'émission et un nombre fixé de fenêtres temporelles de réception se suivent à tour de rôle.

22. Procédé de transmission par radio selon l'une des revendications 16 à 20
**caractérisé par le fait**
**qu'**une trame de multiplexage temporel ayant un nombre fixé de fenêtres temporelles d'émission et une trame de multiplexage temporel ayant un nombre fixé de fenêtres temporelles de réception se suivent à tour de rôle.
